# EUROPEAN PATENT SPECIFICATION

(11) **EP 1 798 880 B1**
(45) Date of publication and mention of the grant of the patent: **17.07.2013**
(21) Application number: 06025841.5
(22) Date of filing: 13.12.2006
(51) Int. Cl.: H04H 60/14, H04H 60/15

(54) **time dependent conditional access in digital broadcasting**
Zeitabhängiger eingeschränkter Zugriff beim digitalen Rundfunk
Accès conditionnel dépendant du temps dans la radiodiffusion numérique

(30) Priority: 13.12.2005 KR 20050122521
(43) Date of publication of application: 20.06.2007
(73) Proprietor: LG Electronics Inc., Seoul 150-721 (KR)
(72) Inventor: Jo, Young Sub, Seoul (KR)
(74) Representative: Katérle, Axel

(56) References cited:
- US-A1- 2002 039 390
- US-A1- 2004 031 055
- "Radio Broadcasting Systems; Digital Audio Broadcasting (DAB) to mobile, portable and fixed receivers; ETSI EN 300 401" ETSI STANDARDS, LIS, SOPHIA ANTIPOLIS CEDEX, FRANCE, vol. BC, no. V1.3.3, 1 May 2001 (2001-05-01), XP014001360 ISSN: 0000-0001
- "Digital Audio Broadcasting (DAB); Conditional access; ETSI TS 102 367" ETSI STANDARDS, LIS, SOPHIA ANTIPOLIS CEDEX, FRANCE, vol. BC, no. V1.1.1, 1 January 2005 (2005-01-01), XP014027341 ISSN: 0000-0001
- 'Digital Audio Broadcasting (DAB) Conditional Access TS 102 367 V1.2.1', [Online] 08 December 2005, ETSI DOC BOX, pages 1 - 38, XP055034616 Retrieved from the Internet: <URL:http://docbox.etsi.org/broadcast/broad cast/Appr_by_corresp/DAB-46/> [retrieved on 2012-08-03]

## Description

### FIELD OF THE INVENTION

The present invention is directed to a digital broadcast system, and more specifically, to a method of providing a digital broadcast and a broadcast receiving terminal for receiving a digital broadcast.

### DESCRIPTION OF THE RELATED ART

Digital audio devices having excellent audio quality, such as CD and DVD devices, have been provided in order to keep up with increasing demands for digital broadcasts having high quality sound. DAB (digital audio broadcasting) has been adopted and serviced by the EU, Canada, the U.S.A. and other countries in order to overcome the limited audio quality provided by conventional FM broadcasts.

The DAB system provides excellent mobile reception capability as well as high quality sound using technology completely different from that of current AM or FM broadcasts. The DAB system is characterized by fast digital data transmissions including videos and characters.

Various multimedia, such as video and broadcasting, is emphasized more with respect to mobile broadcasting services than audio broadcasting in countries such as Korea. Therefore, such multimedia is called digital multimedia broadcasting (DMB).

The U.S.A., the EU and Japan have proposed other mobile broadcasting services that are different than DMB, for example. MediaFLO in the U.S.A., DVB-H (digital video broadcasting-Handheld) in the EU and ISDB-T (integrated service digital broadcasting-terrestrial) in Japan are examples of such mobile broadcasting services.

A function called conditional access (CA) allows only qualified users to view a broadcast service in digital broadcasting. Only a qualified user is able to view a charged, or pay-for-view, service when the CA function is used.

A 'tour' menu is provided in order to enable an Internet user to decide whether to use Internet pay broadcast contents after learning about the Internet pay contents. However, an Internet 'tour' menu is not provided for a digital pay broadcasting service. Therefore, a digital broadcast user has difficulty deciding whether to subscribe to a pay broadcasting service.
US 2002/0039390 A1 relates to a digital broadcasting receiving apparatus for generating a display signal from a received digital broadcasting signal. The apparatus comprises a detection section, a storage section, and a recording section. The detection section detects occurrence of an interrupt event overlapped with the digital broadcasting signal when displayed. The storage section starts storing digital broadcasting signals based on a detection result of this detection section. The recording section records information corresponding to a reproduction start position of the digital broadcasting signal stored by this storage section.
Document ETSI EN 300 401 V1.3.3 (2001-05) refers to a broadcasting standard for the Digital Audio Broadcasting (DAB) system designed for delivery of high-quality digital audio program and data services for mobile, portable and fixed reception from terrestrial or satellite transmitters in the Very High Frequency (VHF)/Ultra High Frequency (UHF) frequency bands as well as for distribution through cable networks. The DAB system is designed to provide spectrum and power efficient techniques in terrestrial transmitter network planning, known as the Single Frequency Network (SFN) and the gap-filling technique. The DAB system is suitable for satellite as well as hybrid/mixed terrestrial/satellite broadcasting, using a simple, nearly omnidirectional receiving antenna. The DAB system meets the required sharing criteria with other radiocommunication services. The DAB transmission signal is also defined. It includes the coding algorithms for audio, multiplexing of audio program and data services, channel coding and modulation. A limited range of supplementary services associated with program services is defined. Provision is also made for transmission of additional data services which may be program related or not, within the time limit of the total system capacity. Information on the system configuration is provided which includes information about the ensembles, services, service components and linking of them. Provision is made for a compatible cross-reference to existing Frequency Modulation (FM) services and Amplitude Modulation (AM) services. The normal characteristics of the emitted DAB signal are described.
US 2004/0031055 A1 refers to a method for constructing and transmitting guidance information for impulse pay-per-view (IPPV) broadcasting service, and a computer-readable recording medium for recording a program that implements the method. The method of the present research includes the step of: inserting an IPPV service descriptor, which is suggested as a standard data structure for transmitting IPPV service purchase guidance information, to an aggregate event information table; and transmitting the aggregate event information table.
The document ETSI TS 102 367 V1.1.1 (2005-01) and V1.2.1 (2005-12) specifies how to use conditional access within the Digital Audio Broadcasting (DAB) system.

### SUMMARY OF THE INVENTION

An object of the present invention is to provide a method of providing a digital broadcast and a broadcast receiving terminal for receiving a digital broadcast, by which a conditional access (CA) digital broadcast can be temporarily provided to enable a digital broadcast user to easily decide whether to subscribe to a pay broadcasting service. The user is allowed to temporarily access the pay broadcasting service without qualification or condition.

In one aspect of the present invention, a method according to claim 1 of providing a digital broadcast service is provides.

In another aspect of the present invention, a terminal according to claim 3 adapted to receive a digital broadcast service is provided.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 illustrates a DMB transmission frame.

FIG. 2 illustrates a Fast Information Block (FIB).

FIG. 3 illustrates a FIG type 0 field.

FIG. 4 illustrates a service component field in packet mode.

FIG. 5 illustrates a service component field in FIC or stream mode.

FIG. 6 illustrates a format of a CAOrg field.

FIG. 7 is a schematic block diagram of a broadcast receiving terminal according to the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers are used throughout the drawings to refer to the same or like parts.

A digital broadcast providing method according to the present invention is explained in the following description using a terrestrial DMB service in Korea as an example. It is apparent that the present invention is applicable not only to the digital broadcasting service in Korea but also to MediaFLO in the U.S.A., DVB-H (digital video broadcasting-Handheld) in the EU, ISDB-T (integrated service digital broadcasting-terrestrial) in Japan as well as other similar services.

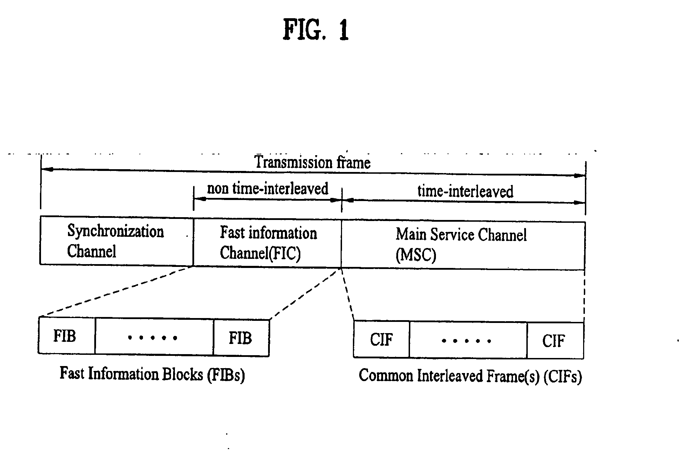

A configuration of a transmission frame for a DMB service defined in ETSI EN 300 401 V1.3.3 (2001-05) and reported as a result of Eureka Project 147 is explained with reference to FIG. 1. FIG. 1 illustrates a DMB transmission frame, which includes a main service channel (MSC), a fast information channel (FIC) and a synchronization channel.

The MSC is used to carry video, audio and data service components. The MSC is a time-interleaved data channel divided into a number of sub-channels, which are individually and convolutionally coded with equal or unequal error protection.

Each sub-channel may carry one or more service components. The organization of the sub-channels and service components is referred to as the multiplex configuration.

The FIC is used to enable a receiver to rapidly access information. Specifically, the FIC is used to send Multiplex Configuration Information (MCI) and, optionally, Service Information and data services together.

The FIC is a non-time-interleaved data channel having fixed equal error protection. The FIC is sub-divided into a plurality of FIBs (Fast Information Blocks).

The Synchronization channel is used internally within the transmission system for basic demodulator functions. Basic demodulator functions include transmission frame synchronization, automatic frequency control, channel state estimation and transmitter identification.

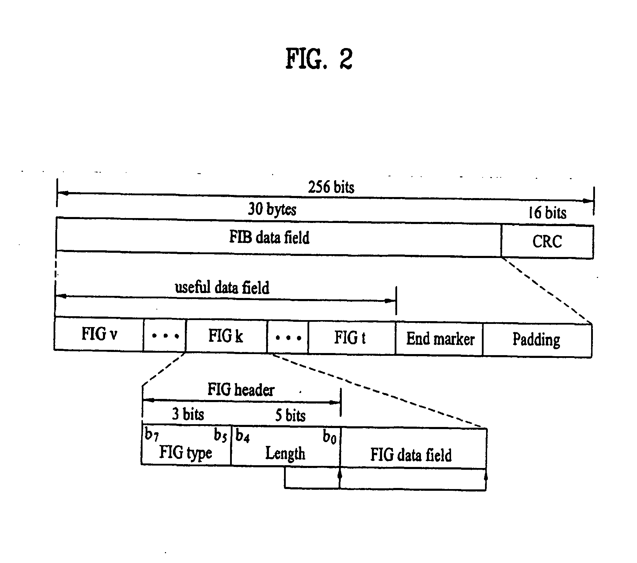

A configuration of an FIB (Fast Information Block) is explained in detail with reference to FIG. 2. FIG. 2 illustrates an FIB.

As illustrated in FIG. 2, an FIB includes an FIB data field and a CRC (cyclic redundancy check). The FIB data field further includes at least one FIG (fast information group), an end marker and padding.

The FIG includes an FIG header and an FIG data field. The FIG header includes an FIG type and a length.

The FIG type indicates the type of data contained in the FIG data field and the length indicates a length of the FIG data field. A list of FIG types is shown in Table 1.

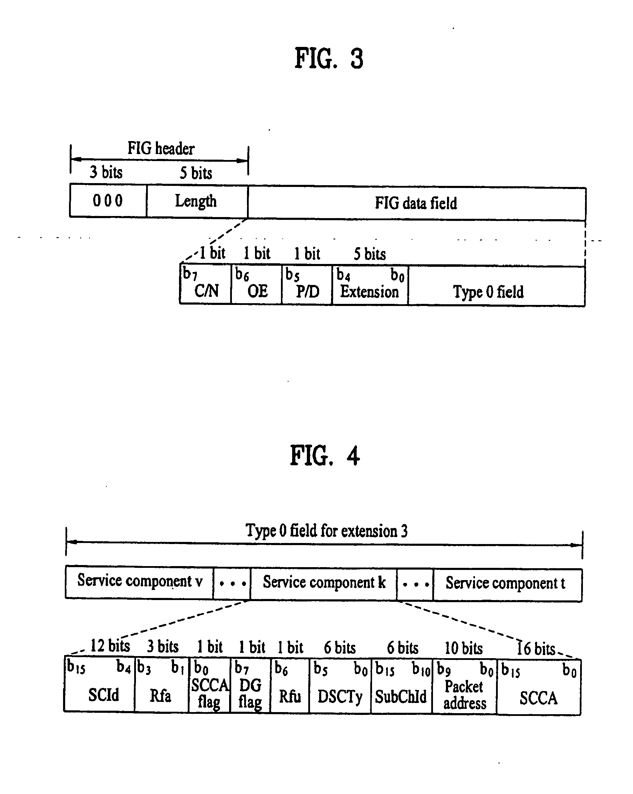

In the present invention, FIG type 0 listed in Table 1 is a major concern of interest. The FIG data field according to FIG type 0 is explained with reference to FIG. 3, which illustrates a FIG type 0 field.

**[Table 1]**

| FIG type number | FIG type | FIG application |
|---|---|---|
| 0 | 000 | MIC and part of the SI |
| 1 | 001 | Labels, etc. (part of the SI) |
| 2 | 010 | Reserved |
| 3 | 011 | Reserved |
| 4 | 100 | Reserved |
| 5 | 101 | FIC Data Channel |
| 6 | 110 | Conditional Access (CA) |
| 7 | 111 | In house (except for Length 31) |

As illustrated in FIG. 3, FIG type 0 is used to indicate current and future multiplex configuration, multiplex reconfiguration, time and date, and other basic service information. As illustrated in FIG. 3, an extension field and a type 0 field exists in the FIG type 0 data field. The extension field identifies one of 32 interpretations of the FIG type 0 field.

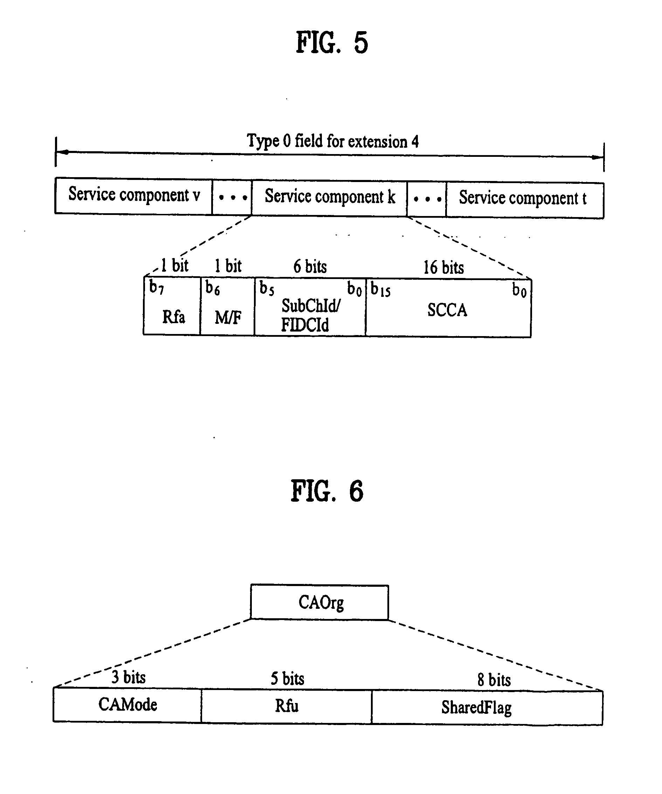

The present invention is directed to Extension 3 and Extension 4 of FIG type 0, which are explained with reference to FIGS. 4 and 5. FIG. 4 illustrates a service component field in packet mode and FIG. 5 illustrates a service component field in FIC or stream mode.

There commonly exists a 16-bit service component conditional access (SCCA) field in a service component field, as illustrated in FIGS. 4 and 5. The SCCA field is assigned for CA, which is defined in detail as CAOrg (CA origination) field in draft version of ETSI TS 102 367 V1.2.1 (2006-01).

Time-limited broadcast reception admission information is recorded in the CAOrg field in order to enable reception of a digital broadcast transmitted by the DMB transmission frame for a limited time. The time-limited broadcast reception admission information preferably includes time-limited broadcast service type information and time-limited broadcast time information.

The time-limited broadcast service type information indicates a type of time-limited broadcast service. The time-limited broadcast time information indicates a time-limited broadcast time, or how long the broadcast service may be toured.

However, it is unnecessary to configure the time-limited broadcast reception admission information in this manner. Alternatively, the time-limited broadcast reception admission information may include either time-limited broadcast service type information or time-limited broadcast time information.

A format of recording the time-limited broadcast reception admission information in the CAOrg field is explained in detail with reference to FIG. 6, which illustrates a format of a CAOrg field. As illustrated in FIG. 6, the CAOrg field includes a 3-bit CAMode (CA mode) field, a 5-bit Rfu (reserved for future use) and an 8-bit SharedFlag field. The CAMode field indicates a currently applied scrambling mode and is defined in draft version of ETSI TS 102 367 V1.2.1 (2006-01) as having the format shown in Table 2.

The present invention proposes to record the time-limited broadcast service type information using the reserved code in the CAMode field. Specifically, a '100', '101', '110' or '111' code is utilized as the time-limited broadcast service type information that allows time-limited access to a CA broadcast. In this way, a user is allowed to 'tour' CA broadcast contents without having to meet a prescribed qualification.

In one embodiment of the present invention, an agreement can be made in advance between a broadcasting station and a broadcast receiving terminal to enable '100', '101', '110' and '111' codes to allow time-limited tours of broadcast services of, respectively, 'Subchannel CA', 'Data Group CA', 'MOT CA' and 'proprietary CA' among various broadcast services. However, the agreement is only exemplary. Alternatively, a 'time-limited tour' may be previously agreed in a different manner, such as utilizing the '101' code to indicate a time-limited tour of 'Subchannel CA' instead of 'Data Group CA'.

**[Table 2]**

| | |
|---|---|
| 000 | Subchannel CA |
| 001 | Data Group CA |
| 010 | MOT CA |
| 011 | Proprietary CA |
| 100 | Reserved |
| 101 | Reserved |
| 110 | Reserved |
| 111 | Reserved |

The present invention further proposes to record the time-limited broadcast time information in the Rfu field using 5 bits. For example, it can be previously agreed that '0001', '00010', '00011' indicate, respectively, 5 seconds, 10 seconds, and 15 seconds.

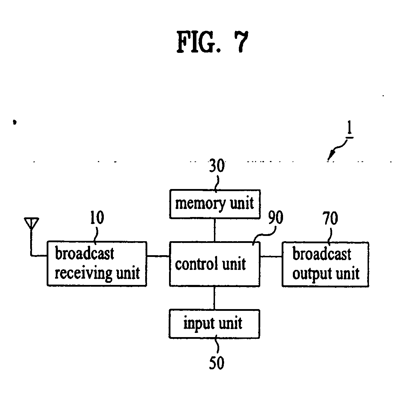

In this way, a terminal user is able to 'tour' a CA broadcast for a predetermined time regardless of qualification to view the CA broadcast when selecting a channel of the CA broadcast according to the present invention. A broadcast receiving terminal capable of providing a broadcast service on a time-limited bases regardless of qualification to receive a CA broadcast by receiving the DMB transmission frame transmitted in the above-explained manner is explained with reference to FIG. 7.

FIG. 7 illustrates a schematic block diagram of a broadcast receiving terminal 1 according to the present invention. As illustrated in FIG. 7, the terminal 1 includes a broadcast receiving unit 10, a memory unit 30, an input unit 50, a broadcast output unit 70 and a control unit 90.

The broadcast receiving unit 10 receives a digital broadcast signal, such as a DMB transmission frame, and performs signal processing on the received signal. The memory unit 30 stores programs necessary for operations and management of the broadcast receiving terminal 1 and various information or data randomly stored according to a user's necessity. The input unit 50 enables a terminal user to input various commands or information to the broadcast receiving terminal 1.

The broadcast output unit 70 outputs a digital broadcast received and signal-processed by the broadcast receiving unit 10 to the terminal user. Preferably, the broadcast output unit 70 includes a video display unit (not shown) and an audio output unit (not shown).

The control unit 90 controls the broadcast receiving unit 10, the memory unit 30, the input unit 50 and the broadcast output unit 70. Specifically, the control unit 90 extracts time-limited broadcast reception admission information from a transmission frame of a digital broadcast provided according to the method of the present invention and controls the digital broadcast such that it is output on a time-limited basis to a terminal user.

The portion of the transmission frame from which the time-limited broadcast reception admission information is extracted has already been explained in the foregoing description of the method according to the present invention. Therefore, a detailed explanation is omitted.

The present invention provides several effects or advantages. A digital broadcast user is allowed to temporarily access a CA pay broadcast service without qualification or condition. In this way, a service provider is able to promote a pay broadcast service subscription to a digital broadcast user and the user is able to temporarily access the pay broadcast service in order to decide whether to subscribe to the pay broadcast service.

Although, a terrestrial DMB is used as an example for the disclosure of the present invention, it will be apparent to those skilled in the art that the present invention is applicable to any digital broadcast capable of implementing the CA broadcasting falling within the scope of the appended claims.

It will be apparent to those skilled in the art that various modifications and variations can be made in the present invention without departing from the scope of the appended claims. Therefore, it is intended that the present invention covers modifications and variations provided they come within the scope of the appended claims.

As the present invention may be embodied in several forms without departing from the scope of the appended claims, it should also be understood that the above-described embodiments are not limited by any of the details of the foregoing description, unless otherwise specified, but rather should be construed broadly within the scope as defined in the appended claims, and therefore all changes and modifications that fall within the scope of the claims are therefore intended to be embraced by the appended claims.

The foregoing embodiments and advantages are merely exemplary and are not to be construed as limiting the present invention. The present teaching can be readily applied to other types of apparatuses.

The description of the present invention is intended to be illustrative, and not to limit the scope of the claims. Many alternatives, modifications, and variations will be apparent to those skilled in the art.

## Claims

1. A method of providing a digital broadcast service, comprising:
generating a digital broadcast transmission frame comprising digital broadcast content and time-limited broadcast reception admission information, at least a portion of the digital broadcast content being subject to conditional access restrictions; and
transmitting the digital broadcast transmission frame to at least one user,
wherein the time-limited broadcast reception admission information enables the at least one user to have temporary access to the conditional access restricted digital broadcast content;
wherein generating the time-limited broadcast reception admission information comprises:
generating time-limited service type information indicating a portion of the conditional access restricted digital broadcast content to which the at least one user has temporary access, the time-limited service type information allows time-limited access to a conditional access, CA, broadcast;
generating the digital broadcast transmission frame comprises:
including the time-limited broadcast reception admission information in at least one Fast Information Block, FIB, of the digital broadcast transmission frame, the at least one FIB comprising at least one Fast Information Group, FIG, each of the at least one FIG having a header indicating a type and a data field having an extension field, and
**characterized in that** generating the digital broadcast transmission frame further comprises
including the time-limited broadcast reception admission information in a reserved for future use field, "Rfu" field, of a service component conditional access, "SCCA", field of a FIG of type 0 with an extension of 3 or 4,
wherein the SCCA field is a "CAOrg" field including a 3-bit CA mode, "CAMode", field, the Rfu field is a 5-bit reserved for future use field and an 8-bit "SharedFlag" field, and wherein the CAOrg field comprises a scrambling code in the CAMode field.
generating the time-limited broadcast reception admission information further comprises:
indicating the time-limited service type information using at least one reserved scrambling code; and
indicating the time-limited broadcast time information using the Rfu field.

2. The method of claim 1, wherein generating the time-limited broadcast reception admission information comprises:
generating time-limited broadcast time information indicating a time for which temporary access is granted.

3. A terminal (1) adapted to receive a digital broadcast service, the terminal comprising:
a receiving unit (10) adapted to receive a digital broadcast transmission frame comprising digital broadcast content and time-limited broadcast reception admission information, at least a portion of the digital broadcast content subject to conditional access restrictions;
an output unit (70) adapted to output the digital broadcast content; and
a control unit (90) adapted to extract the time-limited broadcast reception admission information from the digital broadcast transmission frame and control the output unit according to the extracted time-limited broadcast reception admission information such that a user has temporary access to the conditional access restricted digital broadcast content;
wherein the control unit is further adapted to control the output unit according to:
time-limited service type information indicating a portion of the conditional access restricted digital broadcast content to which the user is given temporary access,
the time-limited service type information allows time-limited access to a conditional access, CA, broadcast;
the control unit is further adapted to
- extract the time-limited broadcast reception admission information from at least one Fast Information Block, FIB, of the digital broadcast transmission frame, the at least one FIB comprising at least one Fast Information Group, FIG, each of the at least one FIG having a header indicating a type and a data field having an extension field and
**characterized in that** the control unit is further adapted to extract the time-limited broadcast reception admission information from a reserved for future use field, "Rfu" field, of a service component conditional access, "SCCA" field of a FIG of type 0 with an extension of 3 or 4,
wherein the SCCA field is a "CAOrg" field including a 3-bit CA mode, "CAMode", field, the Rfu field is a 5-bit reserved for future use field and an 8-bit "SharedFlag" field, and wherein the CAOrg field comprises a scrambling code in the CAMode field.
- determine the time-limited service type information according to at least one reserved brambling code; and
- determine the time-limited broadcast time information according to the Rfu field³.

4. The terminal of claim 3, wherein the control unit is further adapted to control the output unit according to:
time-limited broadcast time information indicating a time for which temporary access is granted.

## Patentansprüche

1. Verfahren zum Bereitstellen eines digitalen Rundsendungsdienstes, umfassend:
Erzeugen eines digitalen Rundsendungsübertragungsrahmens, der digitalen Rundsendungsinhalt und zeitbegrenzte Rundsendungsempfangszulassungsinformationen umfasst, wobei zumindest ein Abschnitt des digitalen Rundsendungsinhalts konditionalen Zugriffseinschränkungen unterworfen ist; und
Übertragen des digitalen Rundsendungsübertragungsrahmens zu zumindest einem Benutzer,
wobei die zeitbegrenzten Rundsendungsempfangszulassungsinformationen den zumindest einen Benutzer in die Lage versetzen, zeitweiligen Zugriff auf den konditional zugriffseingeschränkten, digitalen Rundsendungsinhalt zu erlangen;
wobei das Erzeugen der zeitbegrenzten Rundsendungsempfangszulassungsinformationen umfasst:
Erzeugen von zeitbegrenzten Diensttypinformationen, die einen Abschnitt des konditional zugriffsbeschränkten digitalen Rundsendungsinhalts angeben, zu dem der zumindest eine Benutzer zeitweiligen Zugriff hat,
wobei die zeitbegrenzten Diensttypinformationen einen zeitbegrenzten Zugriff auf eine Konditionalzugriff-, CA, -Rundsendung ermöglichen;
wobei das Erzeugen des digitalen Rundsendungsübertragungsrahmens umfasst:
Einschließen der zeitbegrenzten Rundsendungsempfangszulassungsinformationen in zumindest einem Fast Information Block, FIB, des digitalen Rundsendungsübertragungsrahmens, wobei der zumindest eine FIB zumindest eine Fast Information Group, FIG, umfasst, wobei jede der zumindest einen FIG einen Header aufweist, der einen Typ und ein Datenfeld mit einem Erweiterungsfeld aufweist, und
**dadurch gekennzeichnet, dass** der digitale Rundsendungsübertragungsrahmen weiterhin umfasst
Einschließen der zeitbegrenzten Rundsendungsempfangszulassungsinformationen in einem reserved for future use, "Rfu", -Feld eines Service Component Conditional Access, "SCCA", -Felds einer FIG vom Typ 0 mit einer Erweiterung von 3 oder 4, wobei das SCCA-Feld ein "CAOrg"-Feld ist, das ein 3-Bit-CA-Mode-, "CAMode", -Feld, das Rfu-Feld als ein 5-Bit-reserved for future use-Feld, und ein 8-Bit "shared flag"-Feld umfasst, und wobei das CAOrg-Feld einen Scramblingcode in dem CAMode-Feld umfasst,
Erzeugen der zeitbegrenzten Rundsendungsempfangszulassungsinformationen weiterhin umfasst:
Angeben der zeitbegrenzten Diensttypinformationen unter Verwendung von zumindest einem reservierten Scramblingcode; und
Angeben der zeitbegrenzten Rundsendungszeitinformationen unter Verwendung des Rfu-Felds.

2. Verfahren gemäß Anspruch 1, wobei das Erzeugen der zeitbegrenzten Rundsendungsempfangszulassungsinformationen umfasst:
Erzeugen von zeitbegrenzten Rundsendungszeitinformationen, die eine Zeit angeben, für die ein zeitweiliger Zugriff gewährt wird.

3. Endgerät (1), das eingerichtet ist, um einen digitalen Rundsendungsdienst zu empfangen, wobei das Endgerät umfasst:
eine Empfangseinheit (10), die eingerichtet ist, um einen digitalen Rundsendungsübertragungsrahmen zu empfangen, der digitalen Rundsendungsinhalt und zeitbegrenzte Rundsendungsempfangszulassungsinformationen umfasst, wobei zumindest ein Abschnitt des digitalen Rundsendungsinhalts konditionalen Zugriffsbeschränkungen unterworfen ist;
eine Ausgabeeinheit (70), die eingerichtet ist, um den digitalen Rundsendungsinhalt auszugeben; und
eine Steuereinheit (90), die eingerichtet ist, um die zeitbegrenzten Rundsendungsempfangszulassungsinformationen aus dem digitalen Rundsendungsübertragungsrahmen zu entnehmen und um die Ausgabeeinheit gemäß den entnommenen zeitbegrenzten Rundsendungsempfangszulassungsinformationen derart zu steuern, das ein Benutzer zeitweiligen Zugriff auf den konditional zugriffsbeschränkten digitalen Rundsendungsinhalt hat;
wobei die Steuereinheit weiterhin eingerichtet ist, um die Ausgabeeinheit zu steuern gemäß:
zeitbegrenzten Diensttypinformationen, die einen Abschnitt des konditional zugriffsbeschränkten, digitalen Rundsendungsinhalts angeben, zu dem der Benutzer zeitweiliger Zugriff gegeben ist,
die zeitbegrenzten Diensttypinformationen einen zeitbegrenzten Zugriff auf eine Konditionalzugriffs-, CA, -Rundsendung ermöglichen;
die Steuereinheit weiterhin eingerichtet ist, um:
- die zeitbegrenzten Rundsendungsempfangszulassungsinformationen aus zumindest einem Fast Information Block, FIB, des digitalen Rundsendungsübertragungsrahmens zu entnehmen, wobei der zumindest eine FIB zumindest eine Fast Information Group, FIG, umfasst, wobei jede der zumindest einen FIG einen Header aufweist, der einen Typ und ein Datenfeld angibt, das ein Erweiterungsfeld aufweist, und **dadurch gekennzeichnet, dass**
die Steuereinheit weiterhin eingerichtet ist, um die zeitbegrenzten Rundsendungsempfangszulassungsinformationen aus einem reserved for future use, "Rfu", -Feld eines Service Components Conditional Access, "SCCA", -Felds einer FIG vom Typ 0 mit einer Erweiterung von 3 oder 4 zu entnehmen, wobei das SCCA-Feld ein "CAOrg"-Feld ist, das ein 3-Bit-CA-Mode-, "CAMode"-Feld, das Rfu-Feld als ein 5-Bit-reserved for future use-Feld, und ein 8-Bit "shared flag"-Feld umfasst, und wobei das CAOrg-Feld einen Scramblingcode in dem CAMode-Feld umfasst,
- die zeitbegrenzten Diensttypinformationen gemäß zumindest einem reservierten Scramblingcode zu bestimmen; und
- die zeitbegrenzten Rundsendungszeitinformationen gemäß dem Rfu-Feld zu bestimmen.

4. Endgerät gemäß Anspruch 3, wobei die Steuereinheit weiterhin eingerichtet ist, um die Ausgabeeinheit zu steuern gemäß:
zeitbegrenzten Rundsendungszeitinformationen, die eine Zeit angeben, für die zeitweiliger Zugriff gewährt wird.

## Revendications

1. Procédé de fourniture d'un service de radiodiffusion numérique, comprenant :
la génération d'une trame d'émission de radiodiffusion numérique comprenant un contenu de radiodiffusion numérique et une information d'admission de réception de radiodiffusion limitée dans le temps, au moins une partie du contenu de radiodiffusion numérique étant soumise à des restrictions d'accès conditionnel ; et
l'émission de la trame d'émission de radiodiffusion numérique jusqu'à au moins un utilisateur,
dans lequel l'information d'admission de réception de radiodiffusion limitée dans le temps permet à l'au moins un utilisateur d'avoir un accès temporaire au contenu de radiodiffusion numérique à accès conditionnel restreint ;
dans lequel la génération de l'information d'admission de réception de radiodiffusion limitée dans le temps comprend :
la génération d'une information de type de service limité dans le temps indiquant une partie du contenu de radiodiffusion numérique à accès conditionnel restreint à laquelle l'au moins un utilisateur a un accès temporaire, l'information de type de service limité dans le temps permet un accès limité dans le temps à une radiodiffusion à accès conditionnel, CA ;
la génération de la trame d'émission de radiodiffusion numérique comprend :
l'inclusion de l'information d'admission de réception de radiodiffusion limitée dans le temps dans au moins un Bloc d'Information Rapide, FIB, de la trame d'émission de radiodiffusion numérique, l'au moins un FIB comprenant au moins un Groupe d'Information Rapide, FIG, chacun parmi l'au moins un FIG ayant un en-tête indiquant un type et un champ de données ayant un champ d'extension, et
**caractérisé en ce que** la génération de la trame d'émission de radiodiffusion numérique comprend en outre
l'inclusion de la l'information d'admission de réception de radiodiffusion limitée dans le temps dans un champ réservé à un usage futur, champ « Rfu », d'un champ d'accès conditionnel de composant de service « SCCA » d'un FIG de type 0 avec une extension de 3 ou 4,
dans lequel le champ SCCA est un champ « CAOrg » incluant un mode CA à 3 bits, un champ « CAMode », le champ Rfu est un champ réservé à un usage futur à 5 bits et un champ « SharedFlag » à 8 bits, et dans lequel le champ CAOrg comprend un code d'embrouillage dans le champ CAMode,
la génération de l'information d'admission de réception de radiodiffusion limitée dans le temps comprend en outre :
l'indication de l'information de type de service limité dans le temps en utilisant au moins un code d'embrouillage réservé ; et
l'indication de l'information de temps de radiodiffusion limitée dans le temps en utilisant le champ Rfu.

2. Procédé selon la revendication 1, dans lequel la génération de l'information d'admission de réception de radiodiffusion limitée dans le temps comprend :
la génération d'une information de temps de radiodiffusion limitée dans le temps indiquant un temps pendant lequel un accès temporaire est accordé.

3. Terminal (1) adapté à recevoir un service de radiodiffusion numérique, le terminal comprenant :
une unité de réception (10) adaptée à recevoir une trame d'émission de radiodiffusion numérique comprenant un contenu de radiodiffusion numérique et une information d'admission de réception de radiodiffusion limitée dans le temps, au moins une partie du contenu de radiodiffusion numérique soumise à des restrictions d'accès conditionnel ;
une unité de sortie (70) adaptée à délivrer en sortie le contenu de radiodiffusion numérique ; et
une unité de commande (90) adaptée à extraire l'information d'admission de réception de radiodiffusion limitée dans le temps de la trame d'émission de radiodiffusion numérique et à commander l'unité de sortie en fonction de l'information d'admission de réception de radiodiffusion limitée dans le temps extraite, de telle sorte qu'un utilisateur a un accès temporaire au contenu de radiodiffusion numérique à accès conditionnel restreint ;
dans lequel l'unité de commande est en outre adaptée à commander l'unité de sortie en fonction :
d'une information de type de service limité dans le temps indiquant une partie du contenu de radiodiffusion numérique à accès conditionnel restreint à laquelle l'utilisateur reçoit un accès temporaire, l'information de type de service limité dans le temps permet un accès limité dans le temps à une radiodiffusion à accès conditionnel, CA ;
l'unité de commande est en outre adaptée à :
- extraire l'information d'admission de réception de radiodiffusion limitée dans le temps d'au moins un Bloc d'Information Rapide, FIB, de la trame d'émission de radiodiffusion numérique, l'au moins un FIB comprenant au moins un Groupe d'Information Rapide, FIG, chacun parmi l'au moins un FIG ayant un en-tête indiquant un type et un champ de données ayant un champ d'extension, et
**caractérisé en ce que** l'unité de commande est en outre adaptée à extraire l'information d'admission de réception de radiodiffusion limitée dans le temps d'un champ réservé à un usage futur, champ « Rfu », d'un champ d'accès conditionnel de composant de service « SCCA » d'un FIG de type 0 avec une extension de 3 ou 4,
dans lequel le champ SCCA est un champ « CAOrg » incluant un mode CA à 3 bits, un champ « CAMode », le champ Rfu est un champ réservé à un usage futur à 5 bits et un champ « SharedFlag » à 8 bits, et dans lequel le champ CAOrg comprend un code d'embrouillage dans le champ CAMode,
- déterminer l'information de type de service limité dans le temps en fonction d'au moins un code d'embrouillage réservé ; et
- déterminer l'information de temps de radiodiffusion limitée dans le temps en fonction du champ Rfu.

4. Terminal selon la revendication 3, dans lequel l'unité de commande est en outre adaptée à commander l'unité de sortie en fonction :
d'une information de temps de radiodiffusion limitée dans le temps indiquant un temps pendant lequel un accès temporaire est accordé.
